# EUROPEAN PATENT APPLICATION

(11) **EP 3 065 047 A2**
(43) Date of publication of application: **07.09.2016**
(21) Application number: 15178467.5
(22) Date of filing: 27.07.2015
(51) Int. Cl.: G06F 3/14

(54) **METHOD AND APPARATUS FOR IMPLEMENTING MULTI-SCREEN BY DISTRIBUTING SCREEN AND SHARING INPUT INTERFACE BETWEEN USER**

(30) Priority: 06.03.2015 KR 20150031353
(71) Applicant: WiseJet co., Ltd., Daejeon (KR)
(72) Inventor: Park, Chul Soon, Yuseong-gu, Daejeon (KR); Oh, Inn Yeal, Yuseong-gu, Daejeon (KR); Ahn, Byeong Nam, Yongin-si, Gyeonggi-do (KR)
(74) Representative: Spengler, Robert

(57) **Abstract**

Provided herein is a method and apparatus for implementing a multi-screen by distributing numerous screens and sharing an input interface between user apparatuses, the method including: setting up, by a first user apparatus, a network with each of at least one second user apparatus; receiving, by the first user apparatus, information for setting up each of the at least one second user apparatus as the multi-screen through the network; and setting up, by the first user apparatus, each of the at least one second user apparatus as the multi-screen.

## Description

### CROSS-REFERENCE TO RELATED APPLICATIONS

This application claims priority to Korean Patent Application No. 10-2015-0031353, filed March 6, 2015, the entire disclosure of which is expressly incorporated herein by reference.

### FIELD OF THE INVENTION

Methods and apparatuses consistent with the exemplary embodiments relate to a method and apparatus for implementing a multi-screen by distributing numerous screens and sharing an input interface between user apparatuses, and more particularly, to a method and apparatus for implementing a multi-screen by distributing numerous screens and sharing an input interface between user apparatuses based on a user apparatus and additional display.

### BACKGROUND OF THE INVENTION

Before smart devices such as smart TVs, smart phones, and tablets and N-screen services or multi-screen services emerged, the subject providing the screen was clearly distinguishable depending on the type of the terminal having the screen.

For example, it would not be an exaggeration to say that screens on TVs, mobiles phones, and personal computers have been dominated by broadcasting stations, mobile communication operators, and web portal operators, respectively. However, with the recent evolution of smart devices, networks, contents, and service provisioning platforms and the advent of new media responding to various smart devices, the blurring of boundaries between the subjects who provide the screens is leading to a generalization of an era of cross platform and multi-screen services.

Multi-screen service may be defined as a service that provides an environment where people can approach and consume contents anywhere anytime regardless of the type of their smart devices and platforms. The multi-screen service is not only being activated with the main focus on contents services for real time broadcasting and video on demand, but is expanding to game services where there is much user interaction. The services are provided in the form of providing one content through various screens, in the form of seamless contents service where mobility between screens are taken into account, and in the form providing different contents suitable to each device according to screen characteristics through contents conversion.

An illustrative example of a conventional multi-screen service may be found with reference to Korean Patent document no. KR 10-2007-0133705, the entire specification of which is expressly incorporated herein by reference.

### SUMMARY OF THE INVENTION

One aspect of the present disclosure provides a method for distributing numerous screens and sharing an input interface between user apparatuses.

Another aspect of the present disclosure provides a multi-screen and input device implemented based on a user apparatus.

According to an embodiment of the present disclosure, there is provided a method for implementing a multi-screen by distributing numerous screens and sharing an input interface between user apparatuses, the method including setting up, by a first user apparatus, a network with each of at least one second user apparatus; receiving, by the first user apparatus, information for setting up each of the at least one second user apparatus as the multi-screen through the network; and setting up, by the first user apparatus, each of the at least one second user apparatus as the multi-screen.

The method may further include determining, by the first user apparatus, an input interface for each of the at least one second user apparatus.

The setting up the multi-screen may include setting up of at least one first application to be output on a screen of the first user apparatus and setting up of at least one second application to be output on a screen of each of the at least one second user apparatus.

The method may further include, in response to the first user apparatus receiving a conversion command, the screen of the first user apparatus being converted from a first default screen of the first user apparatus into a second default screen of a certain second user apparatus of the at least one second user apparatus instructed based on the conversion command, wherein the first default screen may be an output screen for the at least one first application set up based on the multi-screen setting, and the second default screen may be an output screen for at least one certain second application set up in the certain second user apparatus set up based on the multi-screen setting of the at least one second application.

In response to the screen of the first user apparatus being converted into the second default screen based on the conversion command, a size of the output screen for the at least one certain second application may be controllable based on the first user apparatus.

In response to the screen of the first user apparatus being converted into the second default screen based on the conversion command, at least one application of the at least one certain second application may be terminable based on the first user apparatus, and in response to the at least one application being terminated, the first user apparatus may perform screen rearrangement for the at least one certain second application except for the at least one terminated application depending on a number of the at least one terminated application to reconfigure the second default screen.

Information on each of the at least one second user apparatus may include output information of each of the at least one second user apparatus, and the output information may include information on a screen size of each of the at least one second user apparatus, and information on possible resolution of each of the at least one second user apparatus.

The method may further include allocating, by the first user apparatus, communication resources for each of the at least one second user apparatus based on the output information; and transmitting, by the first user apparatus, image information for setting up each of the at least one second user apparatus as the multi-screen through the communication resources.

According to another embodiment of the present disclosure, there is provided a user apparatus for implementing a multi-screen by distributing numerous screens and sharing an input interface between user apparatuses, the user apparatus including a processor configured to set up a network with each of at least one other user apparatus, and to receive information for setting up each of the at least one other user apparatus as the multi-screen through the network from each of the at least one other user apparatus, and to perform a multi-screen setting for setting up each of the at least one other user apparatus as the multi-screen.

The processor may be configured to determine an input interface for each of the at least one other user apparatus.

The multi-screen setting may include setting up of at least one first application to be output on a screen of the user apparatus, and setting up of at least one second application to be output on a screen of each of the at least one other user apparatus.

The processor may be configured to convert a screen of the user apparatus from a first default screen of the user apparatus into a second default screen of a certain other user apparatus of at least one other user apparatus instructed based on a conversion command, in response to receiving the conversion command, the first default screen being an output screen for the at least one first application set up based on the multi-screen setting, and the second default screen being an output screen for at least one certain second application set up in the certain other user apparatus set up based on the multi-screen setting of the at least one second application.

The processor may be configured to be capable of controlling a screen size of the output screen for the at least one certain second application, in response to the screen of the user apparatus being converted into the second default screen based on the conversion command.

The processor may be configured to be capable of terminating at least one application of the at least one certain second application, in response to the screen of the user apparatus being converted into the second default screen based on the conversion command, and to perform screen rearrangement for the at least one certain second application except for the at least one terminated user apparatus depending on a number of the at least one terminated application to reconfigure the second default screen, in response to the at least one application being terminated.

The information on each of the at least one other user apparatus may include output information on each of the at least one other user apparatus, the output information including information on a screen size of each of the at least one other user apparatus, and information on a possible resolution of each of the at least one other user apparatus.

The processor may be configured to allocate communication resources for each of the at least one other user apparatus based on the output information, and to transmit image information for setting up each of the at least one other user apparatus as the multi-screen through the communication resources.

According to the aforementioned aspect of the present disclosure, by implementing a multi-screen through a display implemented in each of a plurality of user apparatuses, a plurality of displays may be utilized in various ways as necessary by the user.

### BRIEF DESCRIPTION OF THE DRAWINGS

The above and/or other aspects of the present disclosure will be more apparent by describing certain present disclosure with reference to the accompanying drawings, in which:
Figures 1a-1d illustrate a concept of a method for implementing a multi-screen through a plurality of screens, according to an embodiment of the present disclosure;
Figure 2 illustrates a concept of a method for setting up a multi-screen, according to an embodiment of the present disclosure;
Figures 3a-3b illustrate a concept of a method for controlling a default screen of another user apparatus, according to an embodiment of the present disclosure;
Figure 4 illustrates a concept of a method for adding(moving) an application, according to an embodiment of the present disclosure;
Figure 5 illustrates a concept of a method for setting up an input interface, according to an embodiment of the present disclosure;
Figure 6 is a flowchart illustrating a method for executing an application through a multi-screen, according to an embodiment of the present disclosure;
Figure 7 illustrates a concept of a method for implementing a multi-screen based on each screen of a plurality of other user apparatuses, according to an embodiment of the present disclosure; and
Figure 8 illustrates a concept of a method for setting up a network between a user apparatus and another user apparatus, according to an embodiment of the present disclosure.

### DETAILED DESCRIPTION OF THE INVENTION

Certain exemplary embodiments are described in higher detail below with reference to the accompanying drawings.

In the following description, like drawing reference numerals are used for the like elements, even in different drawings. The matters defined in the description, such as detailed construction and elements, are provided to assist in a comprehensive understanding of exemplary embodiments. However, exemplary embodiments can be practiced without those specifically defined matters. Also, well-known functions or constructions are not described in detail since they would obscure the application with unnecessary detail.

In order to share a screen between user apparatuses, conventional technologies used a method of mirroring an image being output on a screen of a first user apparatus to a screen of a second user apparatus. In such a method, it was possible to output a screen being output on a small screen, on a big screen, but it was not possible to configure various types of screens according to users' intentions. Hereinafter, a method for outputting at least one application through each of a plurality of screens of a plurality of user apparatuses according to the user's intentions according to an embodiment of the present disclosure will be explained.

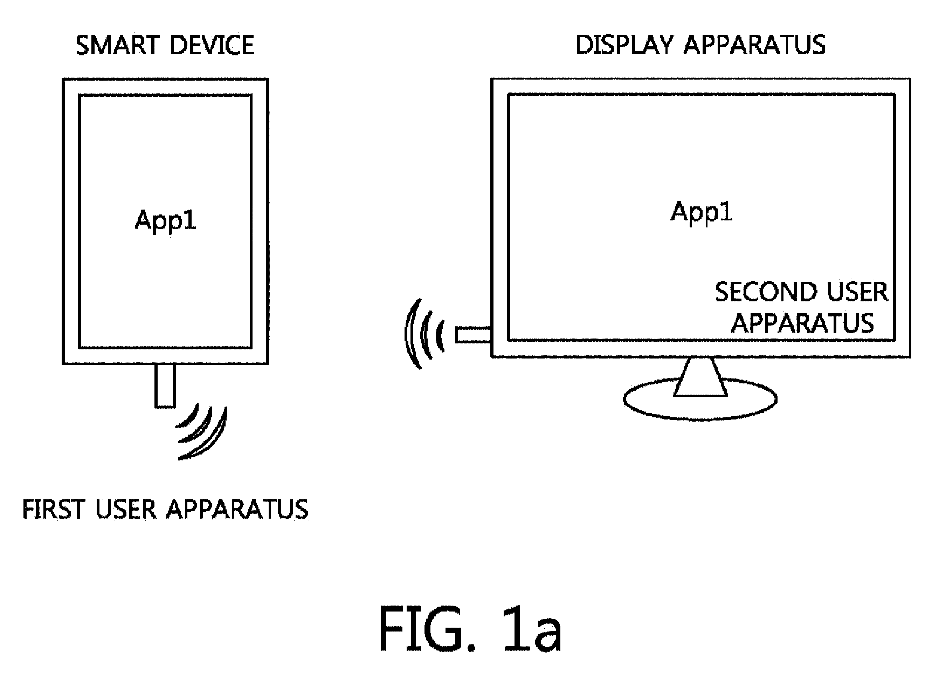

FIGS. 1a-1d illustrate a concept of a method for distributing numerous screens and sharing an input interface between user apparatuses through a plurality of screens (hereinafter referred to as 'method for implementing a multi-screen'). By "numerous screens," as that phrase is used herein, it is meant to include at least two, several and/or a plurality of screens.

FIGS. 1a-1d illustrate a method for outputting screens of a plurality of applications on each screen of the plurality of user apparatuses. The plurality of applications may be various programs that can be executed in a user apparatus such as an image contents streaming program, web searching program, and game program and the like. For example, a first user apparatus may be a smart device (smart phone, smart pad, etc.) and a second user apparatus may be a display apparatus.

Hereinafter, in an embodiment of the present disclosure, the first user apparatus may be differentiated as a main control apparatus, while the second user apparatus is differentiated as a dependent control apparatus. The main control apparatus may be an apparatus configured to control at least one application and to set up a multi-screen to output screens for the at least one application. The dependent control apparatus may be an apparatus configured to output the screens for the at least one application on the multi-screen according to a multi-screen setting made by the main control apparatus.

FIG. 1a illustrates a case where a same application is being executed on the first user apparatus and the second user apparatus through mirroring. For example, the first user apparatus and the second user apparatus may set up an initial connection through a wired/wireless network. The first user apparatus may set up a multi-screen such that application 1 is output on a screen of the first user apparatus and on a screen of the second user apparatus as well. When such a multi-screen is set up, a same screen as the screen being output on the screen of the first user apparatus may be output on screen of the second user apparatus as well through a wired/wireless network between the first user apparatus and the second user apparatus. Hereinafter, explanation will be made based on an assumption that the first user apparatus and the second user apparatus are connected to each other through a wireless network according to an embodiment of the present disclosure.

That is, the first user apparatus may set up a wireless network with the second user apparatus, and control such that the screen being output on the screen of the first user apparatus is mirrored and output on the screen of the second user apparatus. The method for setting up a network between the first user apparatus and the second user apparatus and setting up a multi-screen will be explained in more detail hereinafter.

In a case where an input interface for controlling application 1 is implemented in not only the first user apparatus but also in the second user apparatus, the user may control application 1 through not only the input interface of the first user apparatus but also through the input interface of the second user apparatus.

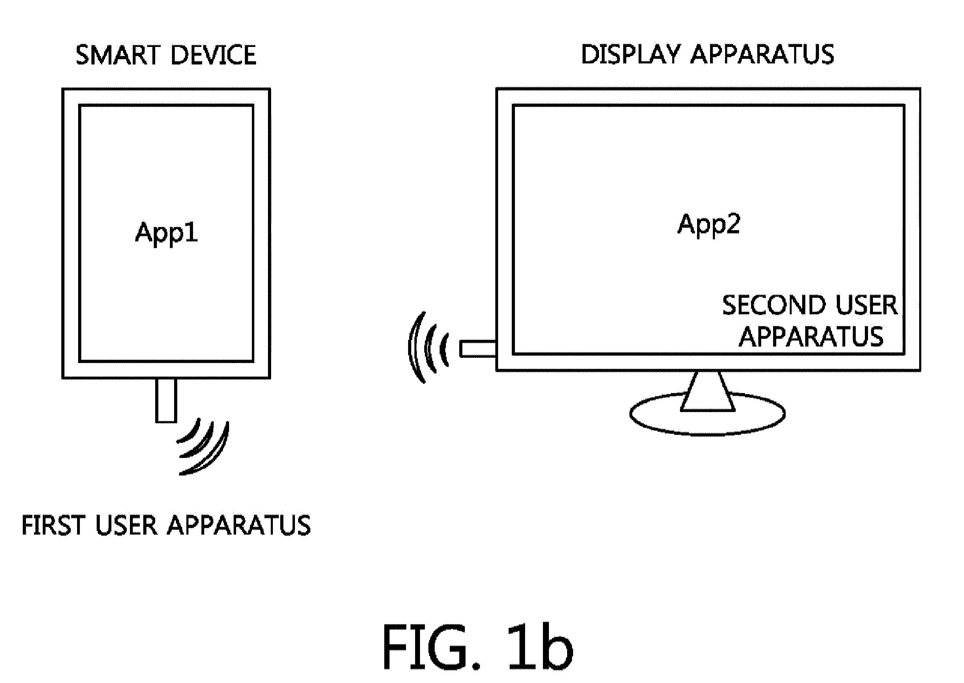

FIG. 1b illustrates a case where different applications are implemented on screens of a first user apparatus and a second user apparatus.

For example, the first user apparatus and the second user apparatus may perform an initial connection to each other through a wired/wireless network. The first user apparatus may execute application 1 and application 2 in the first user apparatus, output application 1 on the screen of the first user apparatus and output application 2 on the screen of the second user apparatus based on a multi-screen setting.

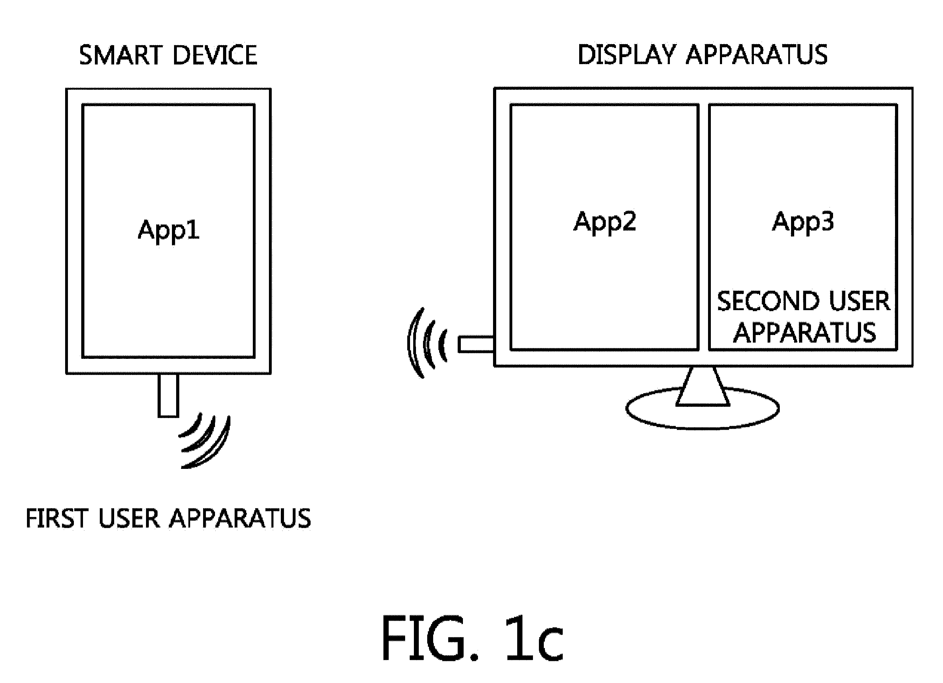

FIG. 1c illustrates a case where different applications are being executed in each of a first user apparatus and second user apparatus, respectively. Especially, FIG. 1c illustrates a case where a screen for a plurality of applications is being output in a certain user apparatus.

For example, the first user apparatus and the second user apparatus may perform an initial connection through a wired/wireless network. The first user apparatus may execute application 1, application 2, and application 3 in the first user apparatus, and output application 1 on a screen of the first user apparatus, and output application 2 and application 3 on a screen of the second user apparatus based on a multi-screen setting.

FIG. Id illustrates a case where a plurality of applications are being output on each screen of a first user apparatus and a second user apparatus. For example, the first user apparatus and the second user apparatus may perform an initial connection through a wired/wireless network. The first user apparatus may execute application 1, application 2, application 3, and application 4 in the first user apparatus, and output application 1 and application 2 on a screen of the first user apparatus, and output application 3 and application 4 on a screen of the second user apparatus based on a multi-screen setting.

FIGS. 1a-1d illustrate a method for mirroring and expanding of an output screen based on two user apparatuses for convenience of explanation, but mirroring and expanding of an output screen based on two or more user apparatuses may also be performed in the same manner. For example, a first user apparatus may operate as a main control apparatus and output application 1, while a second user apparatus operates as a dependent control apparatus and outputs application 2 and application 3, and a third user apparatus operates as a dependent control apparatus and outputs application 4 and application 5.

In such a method, a multi-screen may be implemented through a plurality of available user apparatuses.

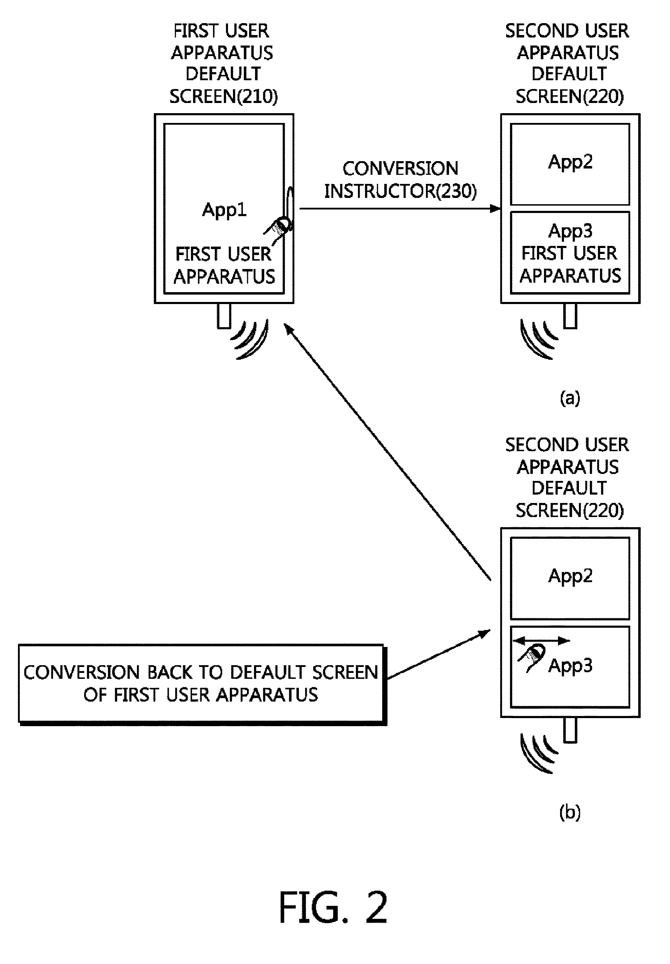

FIG. 2 illustrates a concept of a method for setting up a multi-screen according to an embodiment of the present disclosure.

FIG. 2 illustrates a screen control method after a multi-screen is set up between a plurality of user apparatuses.

Referring to FIG. 2, when a multi-screen is set up, on a screen of a first user apparatus operating as a main control apparatus, there may be provided a conversion instructor 230 configured to instruct the first user apparatus to connect to another user apparatus operating as a dependent control equipment, and to perform a screen conversion between the user apparatuses. The conversion instructor 230 may have one of various formats such as an icon and widget and the like.

The conversion instructor 230 may be used for conversion (switching) between the screens of the first user apparatus and the second user apparatus. When the user touches the conversion instructor 230 disposed on the screen of the first user apparatus, the screen of the first user apparatus may be converted from a default screen 210 of the first user apparatus into a default screen 220 of the second user apparatus. The default screen may be an output screen for an application set up to be output on a screen of a certain user apparatus based on a multi-screen setting.

For example, it is possible to assume a case where a setting is made such that application 1 is output on a screen of a first user apparatus, and application 2 and application 3 are output on a screen of a second user apparatus. In this case, a default screen 210 of the first user apparatus may be an output screen of application 1, and a default screen 220 of the second user apparatus may be an output screen of application 2 and application 3. The user may click the conversion instructor 230 on the screen of the first user apparatus that outputs application 1 in order to control the screen of the second user apparatus that outputs application 2 and application 3. When the conversion instructor 230 is clicked, the default screen 210 of the first user apparatus may be converted into the default screen 220 of the second user apparatus. That is, it is possible to output the default screen 220 of application 2 and application 3 on the screen of the first user apparatus.

It is possible for the user to control a default screen of another user apparatus using the first user apparatus that outputs the default screen of the other user apparatus. The method for controlling a default screen of another user apparatus through a certain user apparatus operating as a main control apparatus will be explained hereinafter.

FIG. 2 illustrates a conversion method made between default screens of the first user apparatus and second user apparatus based on the conversion instructor for convenience of explanation. In a case where two or more user apparatuses implement a multi-screen, however, the conversion instructor may be used to control a default screen of a dependent user apparatus from among two or more dependent user apparatuses. For example, the conversion instructor of the first user apparatus may be used to output a default screen of one of the second user apparatus and third user apparatus operating as dependent control apparatuses of the first user apparatus, on the first user apparatus.

In a case where the user intends to output the default screen of the user apparatus in the user apparatus again, the user may touch the conversion instructor 230 of the user apparatus again, or input a certain input signal (for example, screen touch) into the user apparatus to convert the screen being output in the user apparatus from the default screen of the other user apparatus into the default screen of the user apparatus.

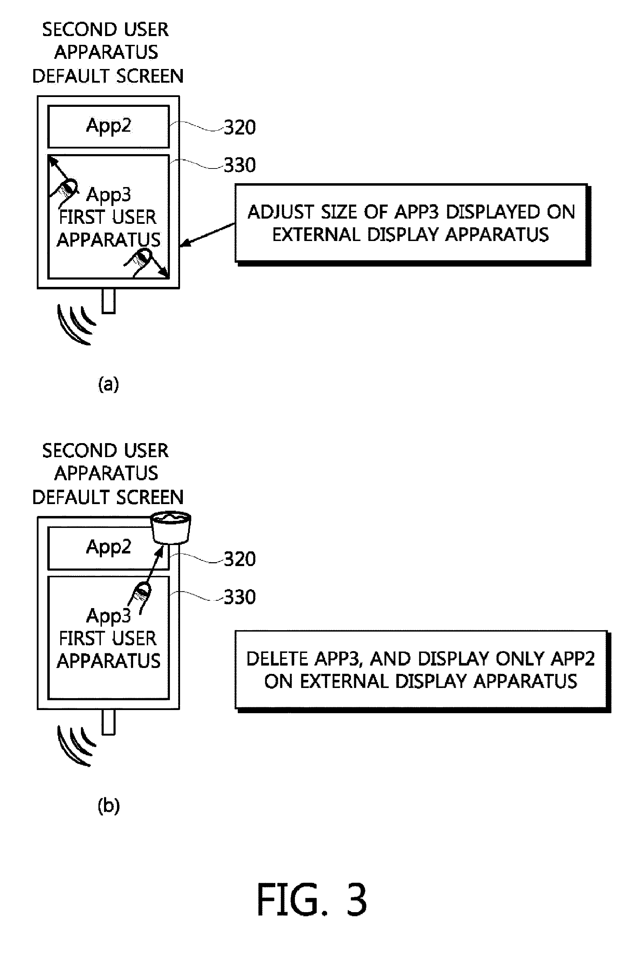

FIGS. 3a-3b illustrate a concept of a method for controlling a default screen of another user apparatus according to an embodiment of the present disclosure.

FIGS. 3a-3b illustrate a method for controlling a default screen of another user apparatus being output in the other user apparatus based on a default screen of the other user apparatus being output in a user apparatus.

Referring to FIG. 3a, a screen size for an application being output on a default screen of another user apparatus may be controlled based on a user apparatus. Specifically, a screen size for each of a plurality of applications being output on a screen of the other user apparatus may be controlled using a screen of the user apparatus.

For example, a default screen of a first user apparatus may be an output screen of application 1, while a default screen of a second user apparatus is an output screen of application 2, 320, and application 3, 330. Based on a conversion instructor disposed in the first user apparatus, the user may convert the default screen of the first user apparatus outputting application 1 to output the default screen of the other user apparatus outputting application 2, 320, and application 3, 330, on the screen of the first user apparatus.

The user may control a screen size for each of application 2, 320, and application 3, 330, being output as default screens on the screen of the second user apparatus by controlling a screen size for each of application 2, 320, and application 3, 330, being output on the screen of the first user apparatus. For example, as the user increases the screen size for application 3, 330, through the screen of the first user apparatus after a default screen conversion, the screen size for application 3, 330, being output on the second user apparatus is increased.

Referring to FIG. 3b, based on a user apparatus, a screen for a certain application being output on a default screen of another user apparatus may be deleted. Specifically, a screen for at least one application being output on the screen of the other user apparatus may be deleted using the screen of the user apparatus.

For example, a default screen of a first user apparatus may be an output screen of application 1, and a default screen of a second user apparatus may be an output screen of application 2, 320, and application 3, 330. The user may convert the default screen of the first user apparatus outputting application 1 based on a conversion instructor disposed in the first user apparatus to output the default screen of the second user apparatus outputting application 2, 320, and application 3, 330, on the screen of the first user apparatus.

The user may set the default screen of the second user apparatus to be the output screen of application 2, 320, by deleting application 3, 330, being output on the screen of the first user apparatus.

After the deleting, the user may set such that, if there is only one application being output on the screen of the other user apparatus, the one application is output on an entirety of screen. Otherwise, the user may set such that, if there are a plurality of applications being output on the screen of the other user apparatus, the plurality of applications are output on the entirety of screen each in a same screen size.

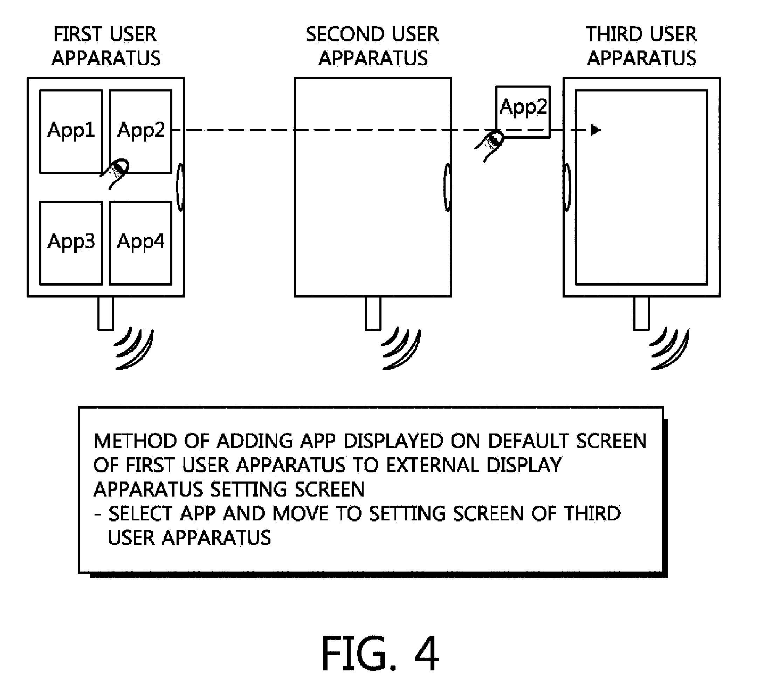

FIG. 4 illustrates a concept of a method for adding (moving) an application according to an embodiment of the present disclosure.

As illustrated, the user may move at least one of application programs, App1~App4, being displayed on a first user apparatus to another user apparatus.

Herein, an application program App2 that has been moved may either be deleted from the screen of the first user apparatus or be maintained.

Such moving or adding of application program App2 is performed by the user's manipulation on the first user apparatus, and the user's manipulation may be made in various methods such as drag manipulation, menu inputting manipulation, and changing setting manipulation and so forth.

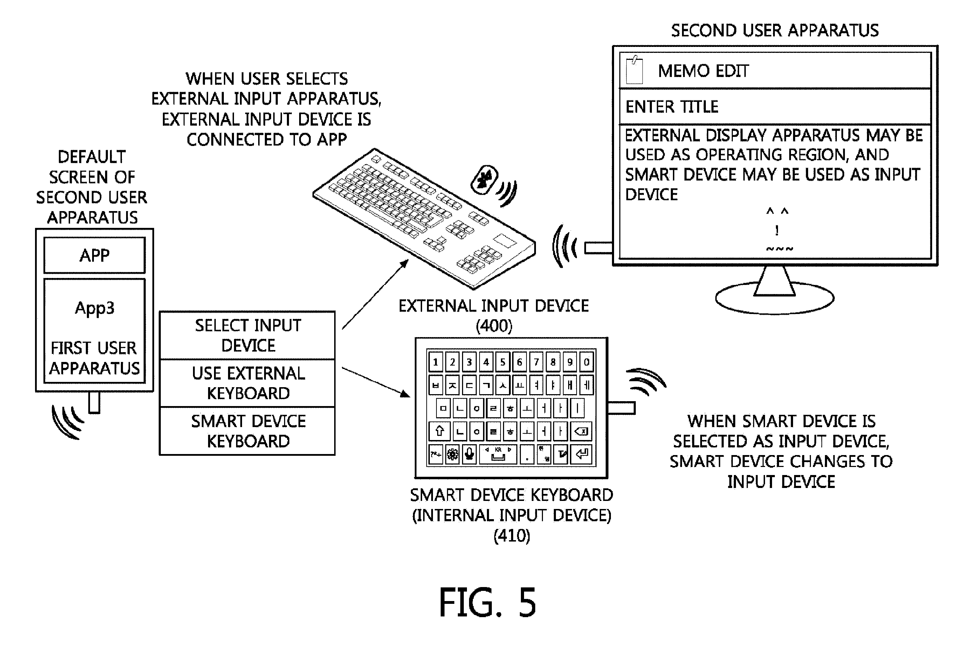

FIG. 5 illustrates a concept of a method for setting up an input interface according to an embodiment of the present disclosure.

FIG. 5 illustrates a method for selecting an external input device 400 or an input device on a user apparatus (hereinafter, referred to as input device 410) as an input interface. For example, the external input device 400 may be a keyboard, mouse, touch pad, or joystick, while the internal input device 410 may be an input interface implemented in the user apparatus.

Referring to FIG. 5, the user apparatus operating as a main control apparatus may select an input interface to control an application being output on a screen of another user apparatus operating as a dependent control equipment.

When an external input device 400 is connected, the user may select the external input device 400 to control the application being output on the screen of the other user apparatus. Otherwise, the user may select the internal input device 410 to control the application being output on the screen of the other user apparatus.

In a case where the user selects the external input device 400, while the screen on the user apparatus is maintained, an input signal may be received from the external input device 400 to control the application being output in the other user apparatus.

In a case where the user selects the internal input device 410, an input interface may be output on the screen of the user apparatus. That is, the input interface may be output on the screen of the user apparatus, and the user may input an input signal through the input interface.

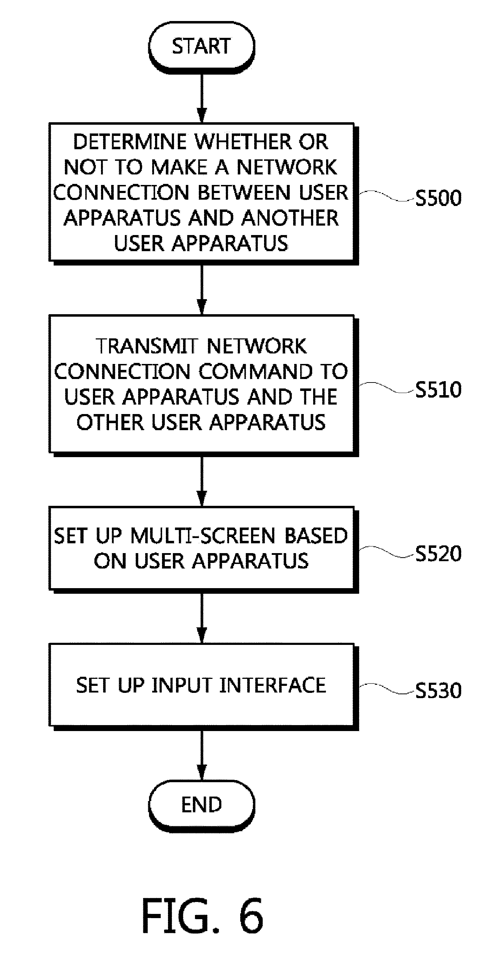

FIG. 6 is a flowchart of a method for executing an application through a multi-screen according to an embodiment of the present disclosure.

FIG. 6 illustrates a method for implementing a multi-screen by outputting at least one application through a screen of each of a plurality of user apparatuses.

Referring to FIG. 6, a user apparatus may determine whether or not to connect the user apparatus to another user apparatus through a network (S500).

For example, the user apparatus and another user apparatus may form a wired network or wireless network through an initial connection setting procedure.

A message indicating whether or not the user apparatus and the other user apparatus are connected through a network is output on the screens of the user apparatus and the other user apparatus (S510).

In response to the user apparatus and the other user apparatus being connected to each other through a network, a connection completion message may be output on the screens of the user apparatus and the other user apparatus. In response to the user apparatus and the other user apparatus not being connected to each other through a network, a connection failure message may be output on the screens of the user apparatus and the other user apparatus. The user apparatus to be used as a main control apparatus may be selected from among a plurality of user apparatuses when setting the network. Hereinafter, explanation will be made based on an assumption that a user apparatus operates as a main control apparatus and another user apparatus operates as a dependent control equipment.

Setting up a multi-screen that is based on a user apparatus is performed (S520).

The user apparatus may set up a multi-screen based on determining an application to be output on the screens of the user apparatus and the other user apparatus. Setting up a multi-screen may be performed in various ways as aforementioned with reference to FIGS. 1a-5.

Setting up an input interface is performed (S530).

An input interface of the user apparatus may be selected to control applications to be output on the screens of the user apparatus and/or other user apparatus.

In a case where an external input interface is connected to the user apparatus and/or other user apparatus, the user apparatus operating as the main control apparatus may receive information on whether or not to use the external input interface, and determine whether or not to use the external input interface. For example, the user may determine which input interface to use from among the external input interface and internal input interface, and input the determined result to the user apparatus. It is also possible to set up both the internal input interface and external interface as input interface.

Based on an input signal being input through the input interface set up from among the internal input interface and/or external input interface, an application being output on the screen of the user apparatus and/or another user apparatus may be controlled.

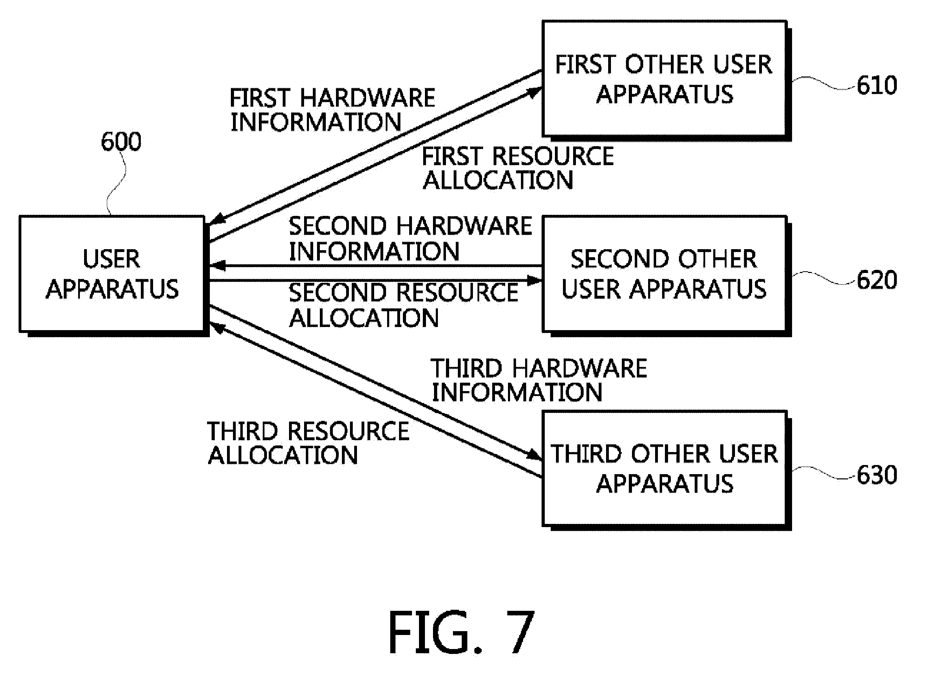

FIG. 7 illustrates a concept of a method for implementing a multi-screen based on a plurality of other user apparatus screens according to an embodiment of the present disclosure.

FIG. 7 illustrates a method for implementing a multi-screen through screens of a plurality of other user apparatuses in a case where one user apparatus operates as a main control apparatus and the plurality of other user apparatuses operate as dependent control apparatuses.

Referring to FIG. 7, a user apparatus 600 may obtain information on a plurality of other user apparatuses connected to the user apparatus 600.

The user apparatus 600 and each of the plurality of other user apparatuses may directly form a network.

For example, the user apparatus 600 may allocate time resources for communicating with each of the plurality of other user apparatuses to each of the plurality of other user apparatuses. In a case where there are three other user apparatuses (a first other user apparatus 610, second other user apparatus 620 and third other user apparatus 630), the user apparatus 600 may allocate a first time resource for communicating with the first other user apparatus 610, a second time resource for communicating with the second other user apparatus 620, and a third time resource for communicating with the third other user apparatus 630 to each of the first 610 to third other user apparatuses 630.

According to an embodiment of the present disclosure, the user apparatus may allocate time resources differently from one another based on hardware information (or output information) of the other user apparatuses. For example, the user apparatus may predict a size of data for outputting an application based on information on a size and/or a set resolution of the plurality of other user apparatuses.

In a case where the first other user apparatus 610 has the biggest screen, the second other user apparatus 620 has a middle size screen, and the third other user apparatus 630 has the smallest screen, the user apparatus may allocate the largest first time resource, a middle size second time resource, and the smallest third time resource. Furthermore, the user apparatus 600 may allocate a relatively larger time resource to another user apparatus of which a state of channel is not good in consideration of channel states with each of the plurality of other user apparatuses.

Not only time resources but also frequency resources may be allocated differently to each of the other user apparatuses. For example, a different frequency resource may be allocated to each of the other user apparatuses based on hardware information (for example, screen size, possible resolution, possible communication speed and so forth) and channel state information of the other user apparatuses.

The user apparatus 600 may receive hardware information on another user apparatuses when initially connecting with the other user apparatus.

Each of the plurality of other user apparatuses may receive information for outputting an application allocated on each screen of the plurality of other user apparatuses through communication with the user apparatuses within the allocated time resource.

For example, it is possible to assume a case where outputting of application 1 is set up in the first other user apparatus 610, outputting of application 2 is set up in the second other user apparatus 620, and outputting of application 3 is set up in the third other user apparatus 630 through the user apparatus. In such a case, the user apparatus 630 may transmit data for outputting application 1 to the first other user apparatus 610 through the first time resource, data for outputting application 2 to the second other user apparatus 620 through the second time resource, and transmit data for outputting application 3 to the third other user apparatus 630 through the third time resource.

In a case where the plurality of other user apparatuses implement a multi-screen, the conversion instructor may be used to instruct another user apparatus to which a conversion is to be made from among the plurality of other user apparatuses. For example, in a case where the first user apparatus 610 to the third other apparatus 630 are being used as other user apparatuses, the conversion instructor may be used to select a default screen to which the screen of the user apparatus 600 is to be converted from among the default screens of the first other user apparatus 610 to the third other user apparatus 630.

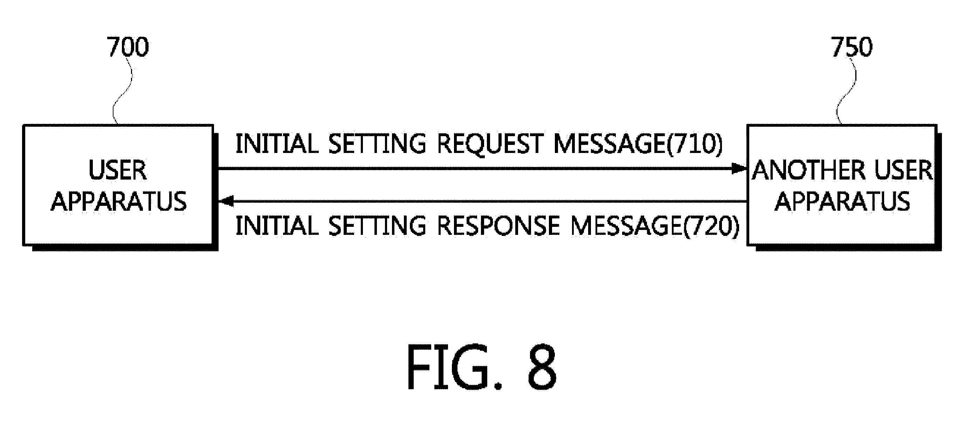

FIG. 8 illustrates a concept of a method for setting up a network between a user apparatus and another user apparatus according to an embodiment of the present disclosure.

FIG. 8 illustrates setting up an initial network between a user apparatus and another user apparatus.

Referring to FIG. 8, the user apparatus 700 may transmit an initial setting request message 710 to another user apparatus 750 in order to use a screen of the other user apparatus 750 as a multi-screen.

The initial setting request message 710 is a message for requesting the other user apparatus 750 to set up a multi-screen, and the initial setting request message 710 may include ID information of the user apparatus 700 and information on a format of the multi-screen that the user apparatus 700 intends to set up.

The other user apparatus 750 may receive the initial setting request message 710, and may transmit an initial setting response message 720 to the user apparatus 700 in response to the initial setting request message 710. The other user apparatus 750 may determine whether or not to perform networking for setting up a multi-screen with the user apparatus 700 based on the format of the multi-screen that the user apparatus 700 intends to set up and ID information of the user apparatus 700.

For example, the other user apparatus 750 may determine whether or not to perform networking for setting up a multi-screen with the user apparatus 700 based on a detected ID of the user apparatus 700. Furthermore, the other user apparatus 750 may determine whether or not to perform networking for setting up a multi-screen with the user apparatus 700 based on a possibility of providing support for the format of the multi-screen that the user apparatus 700 intends to set up.

In a case where the other user apparatus 750 has determined to perform networking for setting up a multi-screen with the user apparatus 700, the initial setting response message 720 being transmitted may include hardware information (or output information) of the other user apparatus 750 or information on a channel state between the user apparatus 700 and the other user apparatus 750.

The hardware information (or output information) of the other user apparatus 750 may include information on a possible resolution of the other user apparatus, a screen size of the other user apparatus 750, and a number of multi-screens that can be output from the other user apparatus 750. The information on a channel state may include information on a channel state between the user apparatus 700 and the other user apparatus 750 determined based on the initial setting request message. The hardware information may be referred to as output information instead.

The user apparatus 700 that has received the initial setting response message 720 may determine a time resource and/or frequency resource for the other user apparatus 750, and include information on the allocated frequency resource and time resource into a resource allocation message, and transmit the resource allocation message to the other user apparatus 750.

Furthermore, the user apparatus 700 may transmit to the other user apparatus 750 data (for example, image data) for outputting an application on the screen of the other user apparatus 750 within the allocated resource.

From the user apparatus 700, the other user apparatus 750 may receive the resource allocation message, and receive the data for outputting an application included in the resource allocation message within the allocated resource.

The other user apparatus 750 may consider the allocated time resource and operate in a power save mode within unallocated time resources to keep a power of a communication module at an off state, and operate in an active mode only within the allocated time resource, thereby saving power consumption.

FIG. 8 illustrates a case where only one other user apparatus is used, but a networking may be performed in the same manner also when a multi-screen is implemented by a user apparatus and a plurality of other user apparatuses.

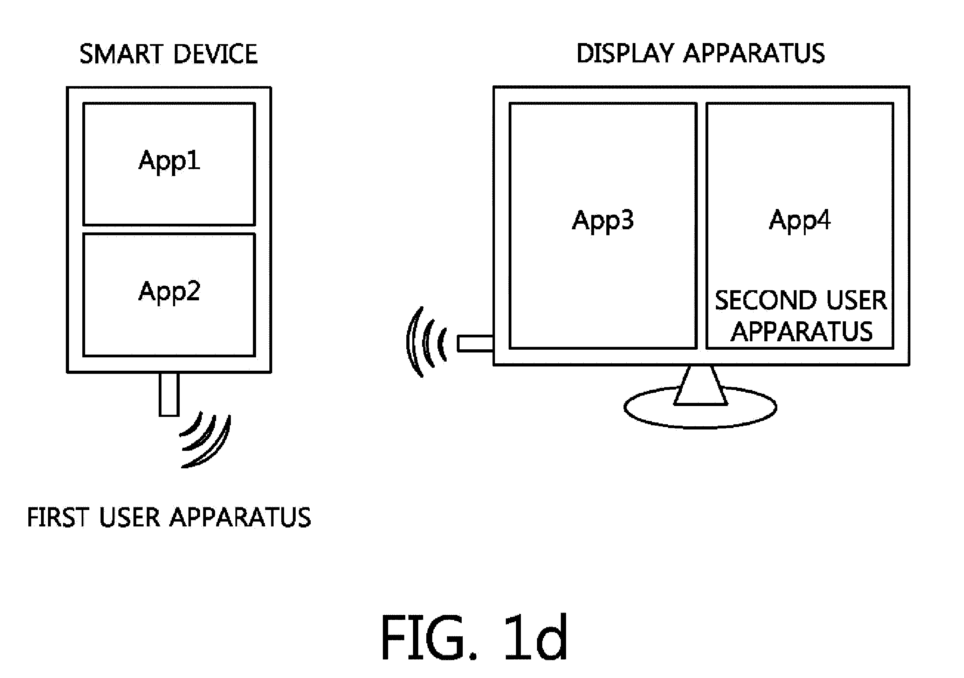

The method for implementing a multi-screen explained with reference to FIGS. 1 to 8 may be performed based on a processor of a user apparatus.

Such a method for implementing a multi-screen using a user apparatus may be implemented as an application or implemented in a form of a program command that may be performed through various computer components, and then be recorded in a computer readable record medium. The computer readable record medium may include a program command, data file, or data structure, or a combination thereof.

The program command being recorded in the computer readable record medium would be one that has been specially designed and configured for the present disclosure or one that is well known to those skilled in the computer software field.

Examples of the computer readable record medium include magnetic media such as a hard disk, floppy disk, and magnetic tape; optical record media such as a CD-ROM and DVD; magneto-optical media such as a floptical disk; and hardware apparatuses specially configured to store and perform program commands such as a ROM, RAM and flash memory and so forth.

Examples of the program command include not only mechanical codes made by compilers but also complex language codes that can be executed by computers using interpreters and so forth. The hardware apparatus may be configured to operate as one or more software modules to perform the processing according to the present disclosure, and vice versa.

In some applications, the present invention described above may be provided as elements of an integrated software system, in which the features may be provided as separate elements of a computer program. Some embodiments may be implemented, for example, using a computer-readable storage medium (e.g., non-transitory) or article which may store an instruction or a set of instructions that, if executed by a processor, may cause the processor to perform a method in accordance with the embodiments. Other applications of the present invention may be embodied as a hybrid system of dedicated hardware and software components. Moreover, not all of the features described above need be provided or need be provided as separate units. Additionally, it is noted that the arrangement of the features do not necessarily imply a particular order or sequence of events, nor are they intended to exclude other possibilities. For example, the features may occur in any order or substantially simultaneously with each other. Such implementation details are immaterial to the operation of the present invention unless otherwise noted above.

The exemplary methods and computer program instructions may be embodied on a computer readable storage medium (e.g., non-transitory) that may include any medium that may store information. Examples of a computer readable storage medium (e.g., non-transitory) include electronic circuits, semiconductor memory devices, ROM, flash memory, erasable ROM (EROM), floppy diskette, CD-ROM, optical disk, hard disk, fiber optic medium, or any electromagnetic or optical storage device. In addition, a server or database server may include computer readable media configured to store executable program instructions. The features of the embodiments of the present invention may be implemented in hardware, software, firmware, or a combination thereof and utilized in systems, subsystems, components or subcomponents thereof.

Furthermore, a software program embodying the features of the present invention may be used in conjunction with a computer device or system. Examples of a computing device or system may include, but are not limited to, an electronic book reading device, a computer workstation, a terminal computer, a server computer, a handheld device (e.g., a tablet computer, a personal digital assistant "PDA", a mobile telephone, a Smartphone, etc.), a web appliance, a network router, a network switch, a network bridge, any machine capable of executing a sequence of instructions that specify an action to be taken by that machine, and any combinations thereof. In one example, a computing device may include and/or be included in, a kiosk.

The computer device or system may also include an input device. In one example, a user of the computer device or system may enter commands and/or other information into computer device or system via an input device. Examples of an input device may include, but are not limited to, an alpha-numeric input device (e.g., a keyboard), a pointing device, a joystick, a gamepad, an audio input device (e.g., a microphone, a voice response system, etc.), a cursor control device (e.g., a mouse), a touchpad, an optical smayner, a video capture device (e.g., a still camera, a video camera), touchscreen, and any combinations thereof. The input device may be interfaced to bus via any of a variety of interfaces including, but not limited to, a serial interface, a parallel interface, a game port, a USB interface, a FIREWIRE interface, a direct interface to bus, and any combinations thereof. The input device may include a touch screen interface that may be a part of or separate from the display.

A user may also input commands and/or other information to the computer device or system via a storage device (e.g., a removable disk drive, a flash drive, etc.) and/or a network interface device. A network interface device, such as network interface device may be utilized for connecting the computer device or system to one or more of a variety of networks and/or one or more remote devices connected thereto. Examples of a network interface device may include, but are not limited to, a network interface card (e.g., a mobile network interface card, a LAN card), a modem, and any combination thereof. Examples of a network may include, but are not limited to, a wide area network (e.g., the Internet, an enterprise network), a local area network

(e.g., a network associated with an office, a building, a campus or other relatively small geographic space), a telephone network, a data network associated with a telephone/voice provider (e.g., a mobile communications provider data and/or voice network), a direct connection between two computing devices, and any combinations thereof. A network may employ a wired and/or a wireless mode of communication. In general, any network topology may be used. Information (e.g., data, software, etc.) may be communicated to and/or from the computer device or system via a network interface device.

The computer device or system may further include a video display adapter for communicating a displayable image to a display device, such as a display device. Examples of a display device may include, but are not limited to, a liquid crystal display (LCD), a cathode ray tube (CRT), a plasma display, a light emitting diode (LED) display, and any combinations thereof. In addition to a display device, the computer device or system may include one or more other peripheral output devices including, but not limited to, an audio speaker, a printer, and any combinations thereof. Such peripheral output devices may be connected to a bus via a peripheral interface. Examples of a peripheral interface may include, but are not limited to, a serial port, a USB connection, a FIREWIRE connection, a parallel connection, and any combinations thereof.

Although a few embodiments of the present disclosure have been shown and described, it would be appreciated by those skilled in the art that changes may be made in this embodiment without departing from the principles and spirit of the invention, the scope of which is defined in the claims and their equivalents.

## Claims

1. A method for implementing a multi-screen by distributing numerous screens and sharing an input interface between user apparatuses, comprising the steps of:
setting up, by a first user apparatus, a network with each of at least one second user apparatus;
receiving, by the first user apparatus, information for setting up each of the at least one second user apparatus as the multi-screen through the network; and
setting up, by the first user apparatus, each of the at least one second user apparatus as the multi-screen.

2. The method according to claim 1, further comprising the step of determining, by the first user apparatus, an input interface for each of the at least one second user apparatus.

3. The method according to claim 1, wherein the step of setting up of the multi-screen comprises setting up of at least one first application to be an output on a screen of the first user apparatus and setting up of at least one second application to be an output on a screen of each of the at least one second user apparatus.

4. The method according to claim 3, further comprising, in response to the first user apparatus receiving a conversion command, the step of the screen of the first user apparatus being converted from a first default screen of the first user apparatus into a second default screen of a certain second user apparatus of the at least one second user apparatus instructed based on the conversion command, wherein the first default screen is an output screen for the at least one first application set up based on the multi-screen setting, and the second default screen is an output screen for at least one certain second application set up in the certain second user apparatus set up based on the multi-screen setting of the at least one second application.

5. The method according to claim 4, wherein, in response to the screen of the first user apparatus being converted into the second default screen based on the conversion command, a size of the output screen for the at least one certain second application being controllable based on the first user apparatus.

6. The method according to claim 4, wherein, in response to the screen of the first user apparatus being converted into the second default screen based on the conversion command, at least one application of the at least one certain second application being terminable based on the first user apparatus, and in response to the at least one application being terminated, the first user apparatus performs screen rearrangement for the at least one certain second application except for the at least one terminated application depending on a number of the at least one terminated application to reconfigure the second default screen.

7. The method according to claim 3, wherein information on each of the at least one second user apparatus comprises output information of each of the at least one second user apparatus, and the output information comprises information on a screen size of each of the at least one second user apparatus, and information on possible resolution of each of the at least one second user apparatus.

8. The method according to claim 7, further comprising the steps of:
allocating, by the first user apparatus, communication resources for each of the at least one second user apparatus based on the output information; and
transmitting, by the first user apparatus, image information for setting up each of the at least one second user apparatus as the multi-screen through the communication resources.

9. A user apparatus for implementing a multi-screen by distributing numerous and sharing an input interface between user apparatuses, comprising:
a processor configured to set up a network with each of at least one other user apparatus, and to receive information for setting up each of the at least one other user apparatus as the multi-screen through the network from each of the at least one other user apparatus, and to perform a multi-screen setting for setting up each of the at least one other user apparatus as the multi-screen.

10. The user apparatus according to claim 9, wherein the processor is configured to determine an input interface for each of the at least one other user apparatus.

11. The user apparatus according to claim 9, wherein the multi-screen setting comprises setting up of at least one first application to be output on a screen of the user apparatus, and setting up of at least one second application to be output on a screen of each of the at least one other user apparatus.

12. The user apparatus according to claim 11, wherein the processor is configured to convert a screen of the user apparatus from a first default screen of the user apparatus into a second default screen of a certain other user apparatus of at least one other user apparatus instructed based on a conversion command, in response to receiving the conversion command, the first default screen being an output screen for the at least one first application set up based on the multi-screen setting, and the second default screen being an output screen for at least one certain second application set up in the certain other user apparatus set up based on the multi-screen setting of the at least one second application.

13. The user apparatus according to claim 12, wherein the processor is configured to be capable of controlling a screen size of the output screen for the at least one certain second application, in response to the screen of the user apparatus being converted into the second default screen based on the conversion command

14. The user apparatus according to claim 12, wherein the processor is configured to be capable of terminating at least one application of the at least one certain second application, in response to the screen of the user apparatus being converted into the second default screen based on the conversion command, and to perform screen rearrangement for the at least one certain second application except for the at least one terminated user apparatus depending on a number of the at least one terminated application to reconfigure the second default screen, in response to the at least one application being terminated.

15. The user apparatus according to claim 11, wherein the information on each of the at least one other user apparatus comprises output information on each of the at least one other user apparatus, the output information comprising information on a screen size of each of the at least one other user apparatus, and information on a possible resolution of each of the at least one other user apparatus.

16. The user apparatus according to claim 15, wherein the processor is configured to allocate communication resources for each of the at least one other user apparatus based on the output information, and to transmit image information for setting up each of the at least one other user apparatus as the multi-screen through the communication resources.
